# EUROPÄISCHE PATENTANMELDUNG

(11) **EP 2 530 817 A1**
(43) Veröffentlichungstag der Anmeldung: **05.12.2012**
(21) Anmeldenummer: 11168055.9
(22) Anmeldetag: 30.05.2011
(51) Int. Cl.: H02M 1/08

(54) **Steuervorrichtung für einen Wechselrichter mit unterschiedlichem Bezugspotenzial**

(71) Anmelder: SIEMENS AKTIENGESELLSCHAFT, 80333 München (DE)
(72) Erfinder: Krätz, Hans-Peter, 91056 Erlangen (DE); Schwesig, Günter, 91054 Erlangen (DE)

(57) **Zusammenfassung**

Die Anmeldung offenbart eine Brückenschaltung zum Ausgeben eines Wechselstroms (34) an einem Verbindungspunkt (16) zwischen einem ersten elektrischen Ventil (8) und einem zweiten elektrischen Ventil (12) in einem Wechselrichter (4), umfassend:
- einen Anschluss (30) für eine Gleichspannungsquelle (28) mit einem Pluspol (46) und einem Minuspol (48),
- das erste elektrische Ventil (8), das zwischen dem Pluspol (46) und dem Verbindungspunkt (16) geschaltet ist,
- das zweite elektrische Ventil (12), das zwischen dem Verbindungspunkt (16) und dem Minuspol(48) geschaltet ist, und
- eine Steuereinheit (60) zum Steuern des ersten elektrischen Ventils (10), wobei die Steuereinheit (60) durch eine Spannungsquelle (64) versorgt wird, die mit dem ersten elektrischen Ventil an eine gemeinsame elektrische, den Wechselstrom (34) führende Leitung angeschlossen ist.

## Beschreibung

Die Erfindung betrifft eine Brückenschaltung zur Erzeugung einer Wechselspannung sowie einen Wechselrichter mit einer solchen Brückenschaltung.

Wechselrichter werden zur Erzeugung von Wechselspannungen mit variabler Frequenz und Amplitude eingesetzt. Zur Ausgabe einer solchen Wechselspannung, die zwischen einer positiven und negativen Amplitude hin und her schwingt, benötigt ein Wechselrichter zwei an eine Gleichspannung aus einer elektrischen (Haupt-)Spannungsquelle angeschlossene Halbbrücken, zwischen denen die Last liegt.

Jede Halbbrücke besteht aus zwei elektrischen Ventilen, die durch eine Steuereinheit geöffnet und geschlossen werden können. Die Steuereinheit wird aus einer elektrischen Hilfsspannungsquelle mit elektrischer Energie versorgt. Zum Schutz der Steuereinheit vor elektrischen Spannungen aus der elektrischen (Haupt-)Spannungsquelle muss die Ansteuerleitung zwischen der Steuereinheit und den elektrischen Ventilen sicher elektrisch getrennt werden.

Herkömmlicherweise werden die elektrische (Haupt-)Spannungsquelle und die elektrische Hilfsspannungsquelle hinsichtlich des jeweiligen Bezugspotenzials auf den Minuspol der elektrischen Energiequelle gelegt, so dass die sichere elektrische Trennung für die elektrischen Ventile, die direkt am gemeinsamen Bezugspotenzial angeschlossen sind, weggelassen werden kann. Für die elektrischen Ventile, die nicht unmittelbar an dem gemeinsamen Bezugspotenzial liegen, ist zumindest noch eine Basiselektronik notwendig.

Die sichere elektrische Trennung wird gewöhnlich durch galvanische Trennung realisiert, wobei die elektrische Energieübertragung induktiv über Transformatoren und die Informationsübertragung optisch über Optokoppler oder induktiv realisiert wird. Derartige Vorrichtungen sind jedoch nicht nur teuer. Sie nehmen auch viel Platz in Anspruch.

Der Erfindung liegt die Aufgabe zugrunde, die Ansteuerung der Halbbrücken eines Wechselrichters kostengünstiger und platzsparender auszugestalten.

Die Aufgabe wird erfindungsgemäß durch die Merkmale der unabhängigen Ansprüche gelöst. Die abhängigen Ansprüche enthalten bevorzugte Ausführungsformen und Weiterbildungen der Erfindung.

Der Erfindung liegt der Gedanke zugrunde, dass das Bezugspotenzial für die Steuereinheit, die die elektrischen Ventile öffnet und schließt, auf die Spannung der Hilfsspannungsquelle keinen Einfluss hat. Die Erfindung erkennt weiterhin, dass auch eine zeitliche Änderung des Bezugspotenzials auf die Spannung der elektrischen Hilfsspannungsquelle keinen Einfluss hat. Insofern kann erkanntermaßen das Bezugspotenzial für die Steuereinheit jeder beliebige Punkt in einem Wechselrichter sein. Diese Erkenntnis zugrundegelegt, wird erfindungsgemäß vorgeschlagen, das ein oder jedes elektrische Ventil, das an den Pluspol der den Wechselrichter versorgenden Gleichspannung angeschlossen ist, mit einer Steuereinheit anzusteuern, deren Bezugspotenzial an einer der leistungsstromführenden Leitungen liegt, mit denen das elektrische Ventil verbunden ist.

Die Erfindung gibt daher eine Brückenschaltung zum Ausgeben eines Wechselstroms an einem Verbindungspunkt zwischen einem ersten elektrischen Ventil und einem zweiten elektrischen Ventil in einem Wechselrichter an. Die Brückenschaltung umfasst einen Anschluss für eine Gleichspannungsquelle mit einem Pluspol und einem Minuspol, das erste elektrische Ventil, das zwischen dem Pluspol und dem Verbindungspunkt geschaltet ist, das zweite elektrische Ventil, das zwischen dem Verbindungspunkt und dem Minuspol geschaltet ist. Die Brückenschaltung umfasst des Weiteren eine Steuereinheit zum Steuern des ersten elektrischen Ventils, wobei die Steuereinheit durch eine (Hilfs-)Spannungsquelle versorgt wird, die mit dem ersten elektrischen Ventil an eine gemeinsame elektrische, den Wechselstrom führende Leitung angeschlossen ist.

Da das am Pluspol der Gleichspannungsquelle angeschlossene erste elektrische Ventil durch eine Steuereinheit gesteuert wird, die mit dem elektrischen Ventil ein gemeinsames Bezugspotenzial teilt, können über die Steuereinheit keine Leistungsströme mehr abfließen, weil dazu kein geschlossener Stromkreis mehr vorhanden ist. Auf diese Weise kann eine sichere elektrische Trennung sowie die Basisisolierung zwischen der Steuereinheit und dem ersten elektrischen Ventil entfallen, was nicht nur zu einer Platzersparnis in der Brückenschaltung, sondern auch zu geringeren Herstellungskosten führt.

In einer besonderen Ausführung der Erfindung sind die Steuereinheit und das erste Ventil in derjenigen gemeinsamen elektrischen Leitung zusammengeschaltet, die den Verbindungspunkt enthält. Mit anderen Worten ist die Steuereinheit niederpotenzialseitig mit dem ersten Ventil verschaltet, so dass das Bezugspotenzial der Steuereinheit und des ersten elektrischen Ventils möglichst nah an der Erdung liegt.

In einer anderen Ausführung der Erfindung weist die Brückenschaltung eine Kommunikationsschnittstelle (Datenschnittstelle) auf, an die die Steuereinheit zum Datenaustausch mit einem externen Steuergerät angeschlossen ist. Bei dem Steuergerät handelt es sich insbesondere um eine Antriebselektronik. Die Kommunikationsschnittstelle ist hierbei von dem ersten elektrischen Ventil sicher elektrisch getrennt. Auf diese Weise ist sichergestellt, dass aus dem ersten Ventil keine Ströme in das Steuergerät abfließen und diese zerstören können.

Vorzugsweise ist hierzu eine sichere elektrische Trennung vorgesehen, die zwischen der Kommunikationsschnittstelle und der Steuereinheit angeordnet ist. Dadurch erfolgt die sichere elektrische Trennung - kommunikationstechnisch gesehen - an der Peripherie der Brückenschaltung. Mit anderen Worten erlaubt diese Anordnung der sicheren elektrischen Trennung, alle Komponenten der Brückenschaltung in den "heißen", d.h. leistungsstromführenden Bereich der Brückenschaltung zu legen. Die sichere elektrische Trennung kann somit andererseits derart zentral gelegt werden, dass sie nicht nur aus der Topologie der Brückenschaltung herausgezogen, sondern auch zur sicheren elektrischen Trennung anderer Elemente in der Brückenschaltung herangezogen werden kann. Auf diese Weise kann die Brückenschaltung besonders kompakt ausgebildet werden.

In einer zusätzlichen Ausführung kann die Steuereinheit zum Erfassen des Wechselstromes vorgesehen sein. Dies kann vorteilhafter Weise dadurch geschehen, dass sich in der gemeinsamen Leitung eine Strommessvorrichtung befindet, die den Wert des Wechselstromes an die Steuereinheit weiterleitet. Dies ist besonders vorteilhaft, da nun auch die Strommessvorrichtung über das gemeinsame Bezugspotenzial keine Leistungsströme mehr zur Steuereinrichtung führen kann, so dass auch eine sichere elektrische Trennung der Strommessvorrichtung von der Steuereinheit nicht notwendig (und deshalb zweckmäßigerweise auch nicht vorgesehen) ist.

In einer weiten Ausbildung der Erfindung kann die Brückenschaltung eine zweite Steuereinheit zum Steuern des zweiten elektrischen Ventils aufweisen, wobei die zweite Steuereinheit durch eine zweite (Hilfs-)Spannungsquelle mit elektrischer Energie versorgt werden kann, deren Bezugspotenzial das Potenzial des Minuspols sein kann. Damit wird nicht eine einzige Steuereinheit zum Steuern beider Ventile verwendet. Die Ansteuerung der beiden elektrischen Ventile erfolgt vielmehr dezentral und kann so die jeweiligen Potenziale, auf denen die beiden elektrischen Ventile liegen, berücksichtigen. Somit können die Steuereinheiten, im Gegensatz zur Verwendung einer herkömmlichen einzelnen Steuereinheit, vollständig in die Hochspannungsseite der Brückenschaltung integriert werden und brauchen weder eine sichere elektrische Trennung noch eine Basisisolierung von den elektrischen Ventilen.

In einer Weiterbildung der Erfindung kann die Brückenschaltung eine von der zweiten Steuereinheit sicher elektrisch getrennte Kommunikationsschnittstelle aufweisen, an die die zweite Steuereinheit zum Datenaustausch mit einem externen Steuergerät, (insbesondere der Antriebssteuerung) angeschlossen ist. Auf diese Weise ist sichergestellt, dass auch das zweite elektrische Ventil keine Leistungsströme beziehungsweise keine gefährlichen Spannungen an das Steuergerät abgeben kann.

In einer zusätzlichen Weiterbildung der Erfindung kann die zweite Steuereinheit zum Erfassen des Potenzials am Verbindungspunkt vorgesehen sein. Wird das Potenzial beispielsweise über einen Spannungsmesser erfasst, der zwischen dem Potenzial und dem Minuspol der Gleichspannung geschaltet ist, braucht auch hier wieder keine sichere elektrische Trennung berücksichtigt werden, da durch den Minuspol als gemeinsames Bezugspotenzial keine Leistungsströme über den Spannungsmesser in die zweite Steuereinheit fließen können.

Erfindungsgemäß wird des Weiteren auch ein Wechselrichter mit mindestens zwei parallel verschalteten Brückenschaltungen der vorstehend beschriebenen Art angegeben. Aufgrund der reduzierten Anzahl an notwendigen sicheren elektrischen Trennungen kann dieser Wechselrichter sehr platzsparend aufgebaut werden.

Die zweiten Steuereinheiten aller einzelnen Brückenschaltungen im Wechselrichter können durch die Parallelschaltung der Brückenschaltungen als gemeinsame Steuereinheit ausgeführt werden, da sie ein gemeinsames Bezugspotenzial in Form des Minuspols aufweisen. In einer Weiterbildung der Erfindung kann der Wechselrichter somit eine zweite Steuereinheit zum gemeinsamen Steuern der zweiten elektrischen Ventile der ersten Brückenschaltung und der oder jeder weiteren Brückenschaltung aufweisen, wobei die zweite Steuereinheit durch eine zweite Hilfsspannungsquelle versorgt wird, deren Bezugspotenzial das Potenzial des Minuspols ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die anhand einer Zeichnung näher erläutert werden. Darin zeigen:
- FIG 1: eine Topologie eines Wechselrichters mit einer her-kömmlichen Halbbrücke,
- FIG 2: eine Topologie eines Wechselrichters mit einer Halb-brücke gemäß einem ersten Ausführungsbeispiel der Erfindung, und
- FIG 3: eine Topologie eines Wechselrichters mit einer Halb-brücke gemäß einem zweiten Ausführungsbeispiel der Erfindung.

Einander entsprechende Teile und Größen sind in allen Figuren stets mit gleichen Bezugszeichen versehen.

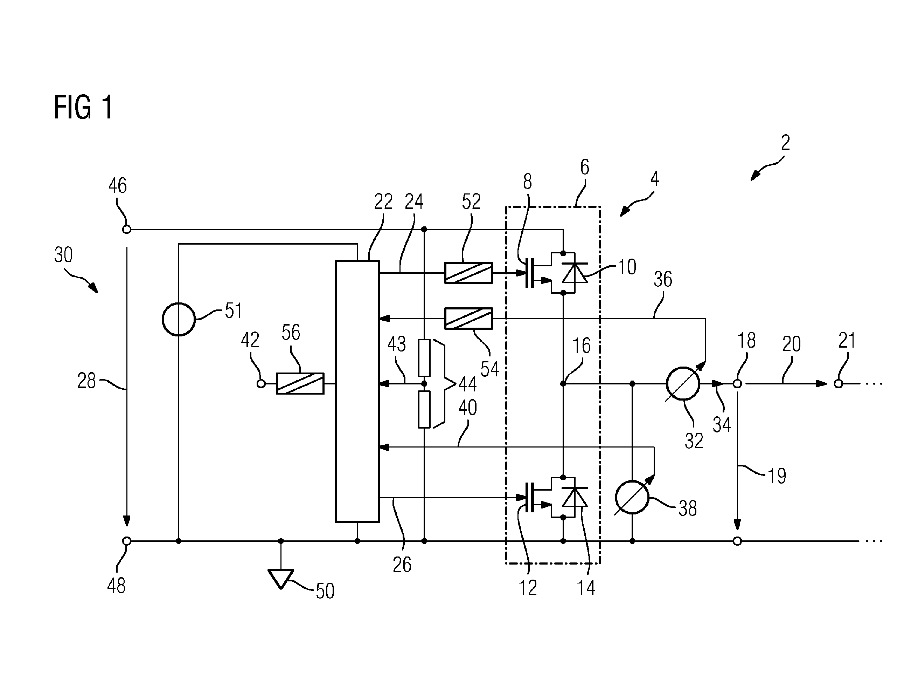

FIG 1 zeigt eine Topologie 2 eines herkömmlichen Wechselrichters 4 mit einer Halbbrücke 6.

Die Halbbrücke 6 weist ein erstes elektrisches Ventil 8 mit einer dazu parallel geschalteten ersten Freilaufdiode 10 und ein zweites elektrisches Ventil 12 mit einer dazu parallel geschalteten zweiten Freilaufdiode 14 auf. Das erste elektrische Ventil 8 und das zweite elektrische Ventil 12 sind in Reihe über einen Verbindungspunkt 16 miteinander verschaltet. Die elektrischen Ventile 8, 12 können Halbleiterschalter wie beispielsweise Bipolartransistoren mit isolierter Gateelektrode (IGBTs) sein.

Der Verbindungspunkt 16 der beiden elektrischen Ventile 8, 12 ist mit einer Ausgangsklemme 18 des Wechselrichters 4 verschaltet und kann zu einer Wechselspannung 20 beitragen, die zwischen dieser Ausgangsklemme 18 und einer Ausgangsklemme 21 einer (nur angedeuteten) zweiten Halbbrücke des Wechselrichters 4 besteht. Die zweite Halbbrücke ist hierbei parallel zu der dargestellten Halbbrücke 6 geschaltet.

Das erste elektrische Ventil 8 kann von einer Steuereinheit 22 über ein erstes Ansteuersignal 24 geöffnet und geschlossen werden. In der gleichen Weise kann das zweite elektrische Ventil 12 von der Steuereinheit 22 über ein zweites Ansteuersignal 26 geöffnet und geschlossen werden. Durch Öffnen und Schließen der elektrischen Ventile 8, 12 kann eine Gleichspannung 28 am Eingang 30 des Wechselrichters 4 in ein wechselndes Potenzial 19 am Ausgang 18 des Wechselrichters 4 umgewandelt werden, das wie bereits erwähnt zur Wechselspannung 20 beträgt. Die Gleichspannung 28 kann beispielsweise aus einem Zwischenkreis bereitgestellt werden, der die von einem elektrischen Energieversorgungsnetz gelieferte elektrische Energie zwischenspeichert.

Der Wechselrichter 4 kann zudem auch zur Regelung einer abgegebenen elektrischen Leistung verwendet werden. Dazu wird mittels eines Strommessgeräts 32 der abgegebene elektrische Strom 34 gemessen und ein entsprechender Stromwert 36 an die Steuereinheit 22 ausgegeben. Ein Spannungsmessgerät 38 misst das Potenzial 19 und übermittelt einen entsprechenden Potenzialwert 40 an die Steuereinheit 22. Ferner kann die Steuereinheit 22 den Wert 43 der Eingangsspannung 28 über einen Spannungsteiler 44 messen. Die Steuereinheit 22 bereitet die Werte 36, 40, 43 datentechnisch auf und sendet sie über eine Datenschnittstelle 42 an eine nicht gezeigte Antriebselektronik.

Die Antriebselektronik berechnet basierend auf diesen Werten 36, 40, 43 die notwendigen Stellwerte für die Ansteuersignale 24, 26 und sendet diese über die Datenschnittstelle 42 zurück an die Steuereinheit 22.

Der Eingang 30 des Wechselrichters 4 umfasst einen Pluspol 46 und einen Minuspol 48. In der Regel stellt der Minuspol 48 das Bezugspotenzial 50 des Wechselrichters 4 dar. Die Steuereinheit 22 wird über eine elektrische Hilfsspannungsquelle 51 mit Spannung versorgt, wobei die Hilfsspannungsquelle 51 und die Steuereinheit 22 ebenfalls auf das Bezugspotential 50 gelegt sind. Das erste elektrische Ventil 10 ist zwischen dem Pluspol 46 und dem Verbindungspunkt 16 geschaltet und somit nicht direkt mit dem Bezugspotenzial 50 verbunden. Würde das erste Ansteuersignal 24 über eine normale elektrische Leitung übertragen werden, könnte die Potenzialdifferenz zwischen dem ersten elektrischen Ventil 8 und dem Bezugspotenzial 50 im Fehlerfall über die Steuereinheit 22 Ströme in nicht unerheblicher Höhe verursachen, die die Steuereinheit 22 beschädigen oder gar zerstören könnten, zumal die Steuereinheit 22 das Bezugspotenzial 50 mit dem Wechselrichter 4 teilt.

Um die Ableitung von Leistungsströmen über die Steuereinheit 22 auszuschließen, muss das erste Ansteuersignal 24 zum ersten elektrischen Ventil 8 über eine erste sichere elektrische Trennung 52 übertragen werden. Aus den gleichen Gründen muss der Wert 36 des Ausgangsstromes 34 über eine zweite sichere elektrische Trennung 54 an die Steuereinheit 23 übertragen werden. Um die nicht gezeigte Antriebselektronik vor Strömen aus dem Wechselrichter 4 zu schützen, muss ferner die Datenschnittstelle 42 ebenfalls von der Steuereinheit 22 über eine dritte sichere elektrische Trennung 56 getrennt werden.

Die erste sichere elektrische Trennung 52 kann beispielsweise aus einem Optokoppler bestehen, der das erste Ansteuersignal 24 über eine Leuchtdiode auf der Seite der Steuereinheit 22 an einen lichtempfindlichen Transistor auf der Seite des ersten elektrischen Ventils 8 überträgt. Demgegenüber kann die dritte sichere elektrische Trennung 56 beispielsweise aus einem Transformator bestehen, dessen gekoppelte Spulen jeweils auf der Seite der Datenschnittstelle 22 und der Seite der Steuereinheit 22 angeordnet sind. Die sicheren elektrischen Trennungen 52, 54, 56 sind jedoch nicht nur teuer. Ihr Platzbedarf ist auch sehr hoch.

Durch die Erfindung kann die notwendige Anzahl an sicheren elektrischen Trennungen 52, 54, 56 in dem Wechselrichter 4 erheblich reduziert werden.

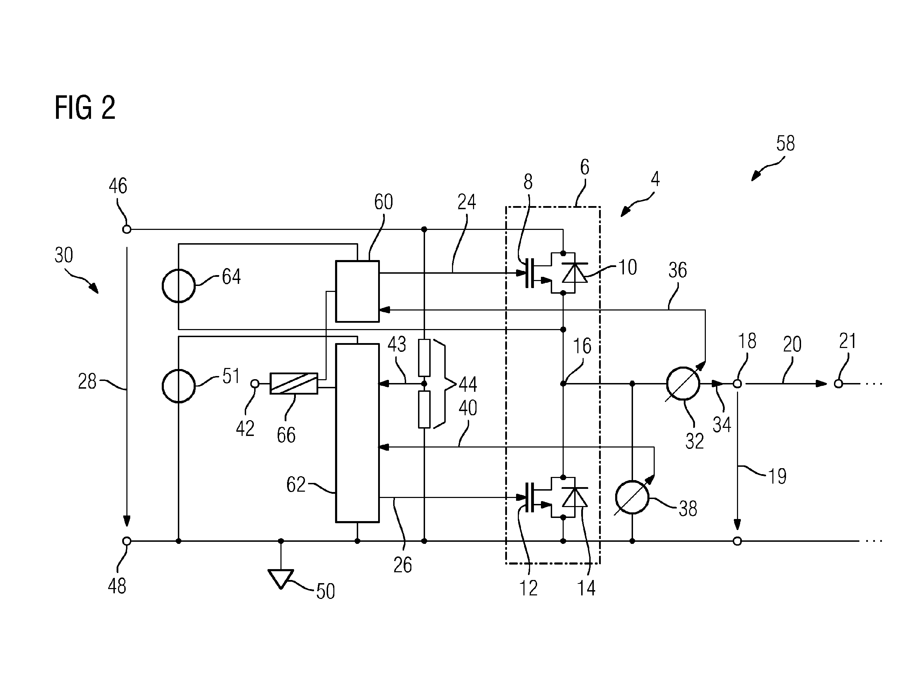

FIG 2 zeigt eine Topologie 58 eines Wechselrichters 4 mit einer Halbbrücke 6 gemäß einem ersten Ausführungsbeispiel der Erfindung. Abgesehen von den nachfolgend beschriebenen Unterschieden gleicht der in FIG 2 dargestellte Wechselrichter 4 dem herkömmlichen Wechselrichter gemäß FIG 1.

In der Topologie 58 des Wechselrichters 4 gemäß FIG 2 ist anstelle der Steuereinheit 22 eine erste Steuereinheit 60 und eine davon getrennte zweite Steuereinheit 62 vorgesehen. Die erste Steuereinheit 60 ist zur Ansteuerung des ersten elektrischen Ventils 8 und zum Messen des Ausgangsstroms 32 vorgesehen, während die zweite Steuereinheit 62 zum Ansteuern des zweiten elektrischen Ventils 12, und zum Erfassen der Ausgangsspannung 20 sowie der Gleichspannung 28 über den Spannungsteiler 44 vorgesehen ist.

Die zweite Steuereinheit 62 wird wie die Steuereinheit 22 der FIG 1 über eine elektrische Hilfsspannungsquelle 51 gespeist, die mit dem Bezugspotenzial 50 verbunden ist. Hingegen wird die erste Steuereinheit 60 aus einer weiteren elektrischen Hilfsspannungsquelle 64 mit elektrischer Energie versorgt, die hinsichtlich ihres Bezugspotentials mit dem Verbindungspunkt 16 verbunden ist, so dass sich das Bezugspotenzial der weiteren elektrischen Hilfsspannungsquelle 64 und der ersten Steuereinheit 60 mit der Frequenz der Ausgangsspannung 20 ständig ändert. Die erste Steuereinheit 60, die zweite Steuereinheit 62 und die Datenschnittstelle 42 sind über eine vierte sichere elektrische Trennung 66 galvanisch voneinander getrennt. Auf diese Weise ist das Bezugspotenzial des ersten elektrischen Ventils 8 und der ersten Steuereinheit 60 gleich, so dass über eine direkte elektrische Verbindung zum Übertragen des ersten Ansteuerungssignals 24 keine elektrischen Ströme vom ersten elektrischen Ventil 8 über die erste Steuereinheit 60 abfließen können. So kann das erste Ansteuersignal 24 von der ersten Steuereinheit 60 direkt über eine elektrische Leitung an das erste elektrische Ventil 8 ausgegeben werden, ohne es einer zugeordneten sicheren elektrischen Trennung bedarf. In derselben Weise kann der Wert 36 des Ausgangsstroms 34 über eine direkte elektrische Leitung an die erste Steuereinheit 60 ausgegeben werden.

Die vierte sichere elektrische Trennung 66 kann beispielsweise aus einem Transformator mit drei Spulen bestehen, die alle miteinander gekoppelt sind. Alternativ kann die vierte sichere elektrische Trennung 66 aber auch aus zwei getrennten herkömmlichen Transformatoren aufgebaut werden, wobei jeder Transformator getrennt Daten zwischen einer der Steuereinheiten 60, 62 mit der Datenschnittstelle 42 austauscht.

Dadurch, dass die erste Steuereinheit 60 mit ihren Bezugspotenzial an dem Verbindungspunkt 16 angeschlossen ist, so dass zwischen dem ersten elektrischen Ventil 8 und der ersten Steuereinheit 60 keine Ströme fließen können, können die erste sichere elektrische Trennung 52 und die zweite sichere elektrische Trennung 54 aus FIG 1 entfallen, wodurch der Wechselrichter 4 mit der Topologie 58 nicht nur kostengünstiger sondern auch platzsparender aufgebaut werden kann.

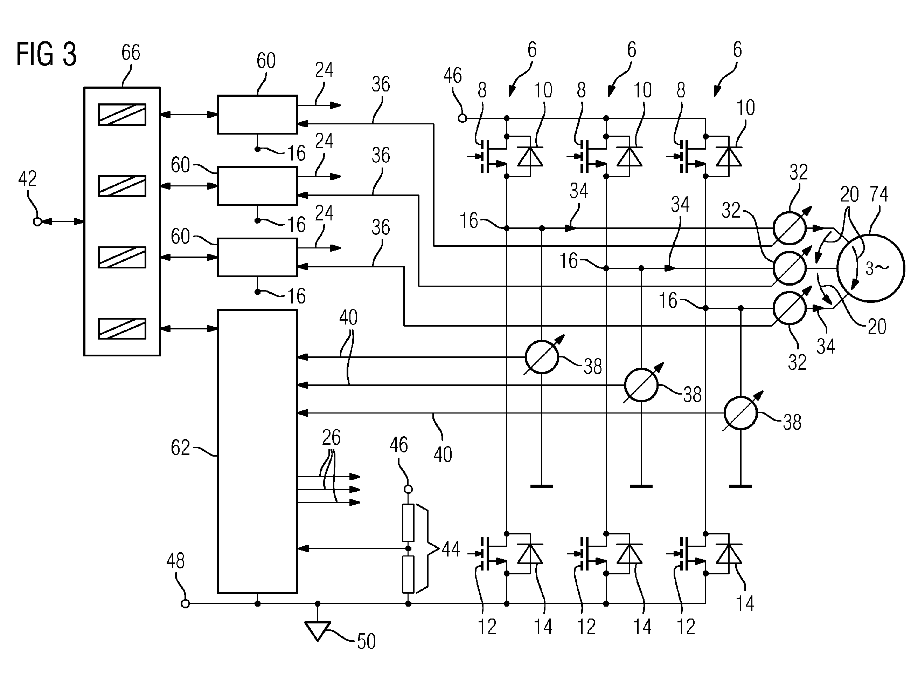

In FIG 3 ist ein dreiphasiger Wechselrichter 70 mit einer Topologie 72 gemäß einem zweiten Ausführungsbeispiel der Erfindung dargestellt.

In der Topologie 72 sind drei Halbbrücken 6 miteinander parallel verschaltet, um einen Motor 74 dreiphasig mit elektrischer Energie zu versorgen. Jede der drei Halbbrücken 6 ist dazu vorgesehen, einen Strom 34 abzugeben. Die einzelnen Ausgangsspannungen 20 zwischen den Ausgangsklemmen 21 der einzelnen Halbbrücken sind jeweils um 120°zueinander verschoben. Dies wird durch eine entsprechende Ansteuerung der elektrischen Ventile 10, 12 über die Steuereinheiten 60, 62 realisiert, die ihrerseits wiederum von der nicht gezeigten Ansteuerelektronik gesteuert werden. Jeder der drei Steuereinheiten 60 steuert mittels des jeweiligen Ansteuersignals 24 das erste Ventil 8 der jeweils zugeordneten Halbbrücke 6 an.

In der vorliegenden Ausführungsform ist die vierte sichere elektrische Trennung aus FIG 2 mit fünf Eingängen versehen. Sie trennt einzelnen Steuereinheiten 60, 62 untereinander und von der der Datenschnittstelle 42.

Jede der drei Steuereinheiten 60 ist hinsichtlich ihres Bezugspotenzials auf dem Verbindungspunkt 16 der jeweils zugeordneten Halbbrücke 6 geschaltet. Da die Ausgangsspannungen 20 untereinander um 120° verschoben sind, sind auch die Potenziale der einzelnen Verbindungspunkte 16 jeweils um 120° verschoben. Damit müssen die ersten Steuereinheiten 60 zur Ansteuerung der ersten elektrischen Ventile 10 alle getrennt voneinander ausgeführt werden, zumal sie auf unterschiedlichen Bezugspotenzialen liegen. Die zweiten elektrischen Ventile 12 können dagegen alle von einer gemeinsamen zweiten Steuereinheit 62 angesteuert werden, da sie alle mit einem gemeinsamen Bezugspotenzial 50 am Minuspol 48 verbunden werden können.

Durch die oben genannten Maßnahmen können die Steuereinheiten 60, 62 ohne weitere Schutzmaßnahmen in die Hochspannungsseite des Wechselrichters 4 gelegt werden.

Erfindungsgemäß wird das Bezugspotenzial einer Steuereinheit eines zum Pluspol einer Halbbrücke geschalteten elektrischen Ventils auf den Pluspol der Ausgangsspannung der Halbbrücke gelegt.

Obwohl die Erfindung im Detail durch die bevorzugten Ausführungsbeispiele näher illustriert und beschrieben wurde, so ist die Erfindung nicht durch die offenbarten Beispiele eingeschränkt. Andere Variationen können vom Fachmann hieraus abgeleitet werden, ohne den Schutzumfang der Erfindung zu verlassen.

## Patentansprüche

1. Brückenschaltung zum Ausgeben eines Wechselstroms (34) an einem Verbindungspunkt (16) zwischen einem ersten elektrischen Ventil (8) und einem zweiten elektrischen Ventil (12) in einem Wechselrichter (4), umfassend:
- einen Anschluss (30) für eine Gleichspannungsquelle (28) mit einem Pluspol (46) und einem Minuspol (48);
- das erste elektrische Ventil (8), das zwischen dem Pluspol (46) und dem Verbindungspunkt (16) geschaltet ist;
- das zweite elektrische Ventil (12), das zwischen dem Verbindungspunkt (16) und dem Minuspol (48) geschaltet ist; und
- eine Steuereinheit (60) zum Steuern des ersten elektrischen Ventils (10), wobei die Steuereinheit (60) durch eine Spannungsquelle (64) versorgt wird, die mit dem ersten elektrischen Ventil an eine gemeinsame elektrische, den Wechselstrom (34) führende Leitung angeschlossen ist.

2. Brückenschaltung nach Anspruch 1, wobei die gemeinsame elektrische Leitung den Verbindungspunkt (16) enthält.

3. Brückenschaltung nach Anspruch 1 oder 2, mit einer Kommunikationsschnittstelle (42), an die die Steuereinheit (60) zum Datenaustausch mit einem externen Steuergerät angeschlossen ist, wobei die Kommunikationsschnittstelle (42) von dem ersten elektrischen Ventil (10) sicher elektrisch getrennt ist.

4. Brückenschaltung nach Anspruch 3, mit einer sicheren elektrischen Trennung (66), die zwischen der Kommunikationsschnittstelle (42) und der Steuereinheit (60) angeordnet ist.

5. Brückenschaltung nach einem der vorstehenden Ansprüche, wobei die Steuereinheit (60) zum Erfassen des Wechselstromes (34) vorgesehen ist.

6. Brückenschaltung nach einem der vorstehenden Ansprüche, umfassend eine zweite Steuereinheit (62) zum Steuern des zweiten elektrischen Ventils (12), wobei die zweite Steuereinheit (62) durch eine zweite Spannungsquelle (51) mit elektrischer Energie versorgt wird, deren Bezugspotenzial das Potenzial des Minuspols (48) ist.

7. Brückenschaltung nach Anspruch 6, mit einer von der zweiten Steuereinheit (62) sicher elektrisch getrennten Kommunikationsschnittstelle (42), an die die zweite Steuereinheit (62) zum Datenaustausch mit einem externen Steuergerät angeschlossen ist.

8. Brückenschaltung nach Anspruch 6 oder 7, wobei die zweite Steuereinheit (62) zum Erfassen des Potenzials (19) am Verbindungspunkt (16) vorgesehen ist.

9. Wechselrichter zum Ausgeben einer Wechselspannung (4) umfassend eine erste Brückenschaltung (6) nach einem der vorstehenden Ansprüche und eine zur ersten Brückenschaltung (6) parallel geschaltete zweite Brückenschaltung (6) nach einem der vorstehenden Ansprüche.

10. Wechselrichter nach Anspruch 7, umfassend eine zweite Steuereinheit (62) zum gemeinsamen Steuern des zweiten elektrischen Ventils (12) der ersten Brückenschaltung (6) und der zweiten Brückenschaltung (6), wobei die zweite Steuereinheit (62) durch eine zweite Spannungsquelle (51) versorgt wird, deren Bezugspotenzial das Potenzial des Minuspols (48) ist.
